# EUROPÄISCHE PATENTANMELDUNG

(11) **EP 1 214 876 A1**
(43) Veröffentlichungstag der Anmeldung: **19.06.2002**
(21) Anmeldenummer: 01129064.0
(22) Anmeldetag: 07.12.2001
(51) Int. Cl.: A01F 15/07, A01F 15/08

(54) **Bodenförderer für eine Rundballenpresse**

(30) Priorität: 18.12.2000 DE 10063120
(71) Anmelder: DEERE & COMPANY, Moline, Illinois 61265-8098 (US)
(72) Erfinder: Lucand, Philippe, 70120 Melin (FR); Viaud, Jean, 70100 Gray (FR)
(74) Vertreter: Magin, Ludwig Bernhard

(57) **Zusammenfassung**

2.1. Bekannte Rundballenpressen weisen ein oberes Ballenformmittel und einen Bodenförderer auf, zwischen denen ein keilförmiger Preßraum gebildet wird. Aufgrund der Keilform läßt sich mitunter nur schwer ein zylindrischer Ballenkern bilden.
2.2. Es wird eine Rundballenpresse (10) vorgeschlagen, bei der der Bodenförderer (30) eine Rolle (65) aufweist, die radial verstellbar ist und auf den Preßraum (42) zu bzw. in diesen hinein geschwenkt werden kann. Auf diese Weise kann die spitzwinklige Keilform in eine ungefähr gleichschenklige oder gar gleichseitige Dreiecksform geändert werden, wodurch der Preßraum (42) schneller gefüllt und der Ballenkern schneller gebildet werden kann.
2.3. Rundballenpressen (10) werden in der Landwirtschaft benutzt.

## Beschreibung

Die Erfindung betrifft eine Rundballenpresse mit einem oberen Ballenformmittel und einem Bodenförderer, zwischen denen ein Preßraum gebildet wird und von denen der Bodenförderer mehrere Rollen aufweist.

Eine aus der US-A-4 208 862 bekannte Rundballenpresse weist einen oberen und einen unteren Förderer auf, von denen der obere Förderer Zugmittel aufweist, die über radial bewegliche Rollen geführt sind und somit eine Größenänderung des Preßraums ermöglichen. Der untere Förderer liegt fest und verleiht dem Preßraum zum Preßbeginn mit dem oberen Förderer eine keilförmige Gestalt.

Das der Erfindung zugrunde liegende Problem wird darin gesehen, daß das Bilden eines Ballenkerns beim Preßbeginn nicht zuverlässig genug erreicht wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die Form des Preßraums während des Preßvorgangs geändert und insbesondere beim Preßbeginn verkleinert werden, so daß das Preßgut leichter erfaßt und auf sich aufgerollt werden kann. Das Ballenformmittel kann aus Riemen, einem Förderband, aus Stabketten, aber auch aus nebeneinander auf schwenkbaren Trägen gelagerten Rollen bestehen.

Die Ausbildung des Bodenförderers als reiner Rollenförderer hat den Vorteil hoher Robustheit, hoher Tragfähigkeit und geringer Störungsanfälligkeit. Unter den Rollen kann wenigstens eine aus einer gemeinsamen Ebene ausgelenkt werden und einen ansonsten vorhandenen Zwickel des Preßraums schließen, so daß das Preßgut leichter aufgerollt werden kann.

Ein unterer Förderer mit Rollen und Zugmitteln, z. B. mehrere seitlich nebeneinander verlaufende Riemen, einem Band oder Stabketten hat den Vorteil, daß sich dieses Zugmittel vollkommen an die Außenumfangsfläche des Rundballens anlegt und diesen führt und die Oberflächendichte erhöht.

Wenn der Bodenförderer in seiner Gesamtheit vertikal schwenkbar ist, kann er zum Abgeben des Rundballens am Pressenende hinten zum Boden hin geneigt werden, wodurch der Rundballen einerseits leichter rollt und andererseits schneller unter der unteren Kante eines schwenkbaren Gehäuses der Rundballenpresse hindurch gelangt.

Die Bewegung der beweglichen Rolle kann auf einer Kreisbahn erfolgen, nämlich dann, wenn die bewegliche Rolle auf einem oder mehreren um eine Achse schwenkbaren Armen gelagert ist, oder einer unregelmäßigen Kurve verlaufen, die z. B. mittels einer Kurvenbahn oder einem Mehrfachlenker bestimmt wird.

Wenn die Schwenkachse der beweglichen Rolle in einem Bereich zwischen zwei Trumen liegt, können auch die Schwenkarme darin angeordnet werden, so daß die Trume vollkommen ungestört bleiben.

Die die Bewegung des Rundballens und somit des Preßraums steuernde Wirkung der beweglichen Rolle wird erhöht, wenn in der Klappe eine zweite bewegliche Umlenkrolle vorgesehen ist, die ebenfalls den Preßraum klein hält und mit der ersten Rolle funktionell und räumlich zusammenwirkt. Dadurch, daß die bewegliche Rolle in einem beweglichen Gehäuseteil der Rundballenpresse vorgesehen ist, bewegt sie sich während des Auswurfs des Rundballens mit diesem und aus dem Bewegungsbereich des Rundballens, so daß dieser leichter entfallen kann.

Wenn beide Rollen, gegebenenfalls mit einem darüber verlaufenden Zugmittel, stets in unmittelbarer Nachbarschaft zueinander bleiben, ergibt sich ein annähernd runder Preßraum, in dem das Preßgut leicht aufgerollt werden kann.

Eine Bewegung der beweglichen Rolle zwischen zwei fest angeordneten Rollen des Bodenförderers bewirkt, daß das Zugmittel stets auf den ortsfesten Rollen aufliegt, was eine Antriebsübertragung stets sicherstellt.

In einem Fall, in dem die bewegliche Rolle zeitweise an die Stelle einer endseitigen ortsfesten Rolle tritt, kann mit dem ohnehin längeren Zugmittel auch die Förderfläche des Bodenförderers in der Austrittsrichtung verlängert werden.

In der Zeichnung sind zwei nachfolgend näher beschriebene Ausführungsbeispiele der Erfindung dargestellt. Es zeigt:
- Fig. 1: eine Rundballenpresse nach einem ersten Ausführungsbeispiel mit festen Rollen in einer Klappe am Beginn eines Preßvorgangs,
- Fig. 2: die Rundballenpresse aus Figur 1 am Ende des Preßvorgangs,
- Fig. 3: die Rundballenpresse aus Figur 1 beim Auswerfen des Rundballens,
- Fig. 4: eine Rundballenpresse nach einem zweiten Ausführungsbeispiel mit einer beweglichen Rolle in einer Klappe am Beginn eines Preßvorgangs, und
- Fig. 5: die Rundballenpresse aus Figur 4 am Ende des Preßvorgangs vor dem Auswerfen des Rundballens.

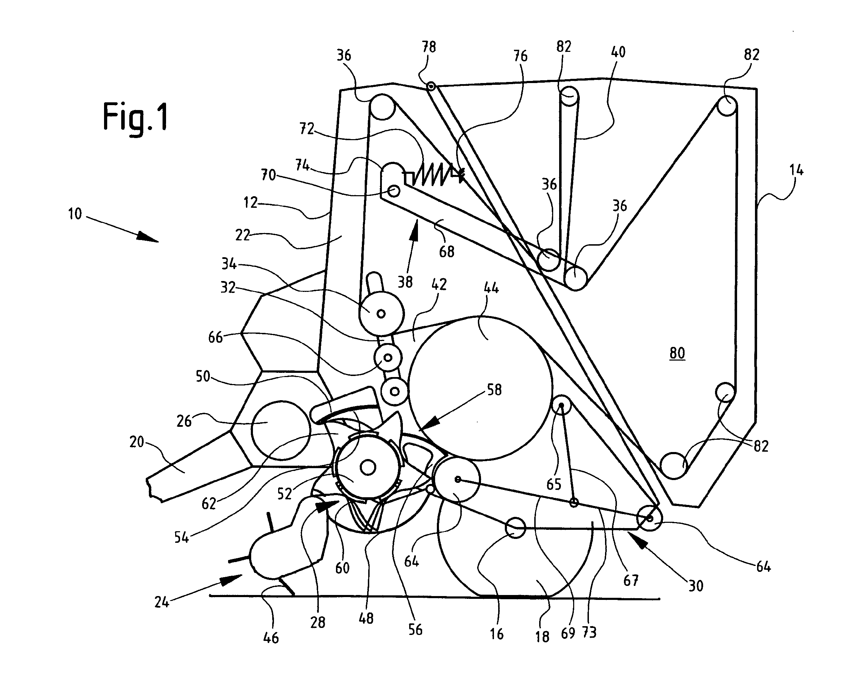

Figur 1 zeigt eine Rundballenpresse 10 mit einem vorderen Rahmen 12 und einer rückwärtigen Klappe 14.

Die Rundballenpresse 10 dient in herkömmlicher Weise dazu, gemähtes Erntegut aufzunehmen und zu Rundballen zu pressen, deren Größe variabel ist. Grundsätzlich könnte die Erfindung aber auch bei einer Rundballenpresse 10 verwendet werden, die einen im wesentlichen größenunveränderlichen Preßraum aufweist.

Der Rahmen 12 enthält eine Achse 16 mit Rädern 18, eine Deichsel 20 und Seitenwände 22 und trägt einen Aufnehmer 24, einen Förderer 26, ein Schneidwerk 28, einen Bodenförderer 30, einen Träger 32 mit Walzen 34, Umlenkrollen 36, eine Spannvorrichtung 38 und Ballenformmittel 40. Der Rahmen 12 stützt sich mittels der Achse 16 und der Räder 18 auf dem Boden ab, so daß die Rundballenpresse 10 von einem nicht gezeigten Zugfahrzeug über ein Feld gezogen werden kann.

Die Deichsel 20 ist mit dem Rahmen 12 starr, nachgiebig oder verstellbar verbunden und dient dem Anschluß an das Zugfahrzeug. Die Seitenwände 22 sind starr auf dem Rahmen 12 befestigt und begrenzen einen Preßraum 42 für einen Rundballen 44 seitlich.

Der Aufnehmer 24 ist in herkömmlicher Weise als eine Pick-Up ausgebildet, die die gleiche oder eine größere Breite als der Preßraum 42 aufweist. Der Aufnehmer 24 nimmt mit oberschlächtig fördernden Zinken 46 Erntegut vom Boden auf und bewegt es entlang einer nicht näher bezeichneten Förderfläche zu dem Schneidwerk 28, von wo aus es in den Preßraum 42 eingespeist wird.

Der Förderer 26 arbeitet unterschlächtig und ist als Rotor ausgebildet, der dabei hilft, das von dem Aufnehmer 24 herangeführte Gut in das Schneidwerk 28 einzuspeisen. Der Förderer 26 kann eine glatte Oberfläche aufweisen oder mit Mitnehmern, Zinken, Zähnen, Rippen, Schnecken oder dergleichen besetzt sein.

Das Schneidwerk 28 enthält einen Boden 48, einen Deckel 50, einen Rotor 52, Messer 54 und Abstreifer 56, wie dies an sich bekannt ist. Das Schneidwerk 28 ist für die Erfindung nicht wichtig, sondern nur bei diesem Ausführungsbeispiel zusätzlich mit angeführt; insbesondere können die Messer 54 entfallen, so daß der Rotor 52 als ein einfacher Förderer wirkt. Wenn das Schneidwerk 28 vorhanden ist, dient es dazu, von dem Aufnehmer 24 herangeführtes Gut zu zerkleinern, so daß es in dem Preßraum 42 besser verdichtet werden kann.

Der Boden 48 erstreckt sich zwischen dem Aufnehmer 24 und dem Bodenförderer 30 und nimmt eine Krümmung ein, die im wesentlichen dem Radius des Rotors 52 folgt.

Der Deckel 50 erstreckt sich mit gleicher Krümmung zwischen dem Förderer 26 und dem Träger 32, bzw. einer an seinem unteren Endbereich angeordneten Walze 34. Stromaufwärts des Rotors 52 bilden der Boden 48 und der Deckel 50 eine Aufnahmeöffnung und stromabwärts von ihm bilden sie einen Einlaß 58 des Preßraums 42, der zugleich von der unteren Walze 34 und dem Bodenförderer 30 begrenzt wird. Der Einlaß 58 befindet sich beim Blick auf die Rundballenpresse 10 von links im ersten Quadranten des Rotors 52 und somit im wesentlichen seitlich von ihm.

Der Rotor 52 weist ein Zentralrohr 60 und nachlaufend gekrümmte auf das Zentralrohr 60 aufgesetzte Mitnehmer 62 auf. Das Zentralrohr 60 wird mittels eines nicht gezeigten Antriebs im Uhrzeigerdrehsinn angetrieben, wenn man die Rundballenpresse 10 von der linke Seite betrachtet. Die Mitnehmer 62 sind im wesentlichen dreiecksförmig und reichen mit einer Spitze bis nahezu an den Boden 48 und den Deckel 50. Insgesamt sind fünf Reihen Mitnehmer 62 in Schraubenlinienform auf das Zentralrohr 60 aufgeschweißt oder aufgeschraubt, wobei die Mitnehmer 62 in der Axialrichtung des Rotors 52 einen Abstand zueinander aufweisen. Der Durchmesser des Rotors 52 ist von beträchtlicher Größe und nimmt ca. 0,6 m ein.

Die Messer 54 sind in herkömmlicher Weise ausgebildet und können vorzugsweise in verschiedenen Stellungen arretiert werden und bei Überlast ausweichen. Die Messer 54 erstrecken sich durch nicht sichtbare Schlitze im Deckel 50 in alle oder einen Teil der Zwischenräume zwischen den Mitnehmern 62. Die Messer 54 werden von einem gemeinsamen verstellbaren aber nicht gezeigten Träger gehalten und können sich in einer Endstellung bis zu dem Zentralrohr 60 und in einer anderen Endstellung bis an die Innenkante des Deckels 50 erstrecken. Wie bereits erwähnt, können die Messer 54 auch entfallen, so daß der Rotor 52 nicht als schneidender, sondern nur als fördernder Rotor 52 wirkt. Die Messer 54 befinden sich oberhalb des Rotors 52 und stromaufwärts des Einlasses 58.

Die Abstreifer 56 befinden sich stromabwärts der Messer 54 und ebenfalls in den Zwischenräumen zwischen den Mitnehmern 62. Eine Oberkante der Mitnehmer 62 verläuft zu der Klappe 14 hin leicht abfallend und geringfügig gebogen. Die Abstreifer 56 grenzen einerseits an das Zentralrohr 60 und andererseits an den Bodenförderer 30 an, wobei sie deren Kontur sehr eng folgen. Die Lage der Abstreifer 56 ist so gewählt, daß sich der Rundballen 44 in der Anfangsphase der Ballenbildung teilweise auf ihnen abstützen kann und verschließen somit den Einlaß 58 zu einem gewissen Teil.

Der Bodenförderer 30 wird in diesem Ausführungsbeispiel von zwei ortsfest gelagerten Rollen 64, einer beweglichen Rolle 65, Armen 67, einem Träger 69 und einem Zugmittel 71 gebildet. Die festen Rollen 64 sind in den Endbereichen des Trägers 69 drehbar gelagert. In diesem Ausführungsbeispiel weist die vordere Rolle 64 einen größeren Durchmesser auf als die beiden verbleibenden Rollen 64, 65. Die bewegliche Rolle 65 ist drehbar an den freien Enden der vertikal schwenkbare Arme 67 aufgenommen. Die Arme 67 greifen zwischen den beiden Rollen 64 an dem Träger 69 in einem Lager 73 an und sind so bemessen, daß sie in einer ganz nach hinten geklappten Stellung die Rolle 65 hinter der rückwärtigen Rolle 64 positionieren können. Das Lager 73 zum Aufnehmen der Arme 67 befindet sich in dem Raum zwischen den festen Rollen 64 und zwischen dem oberen und unteren Trum des Zugmittels 71. Der Träger 69 ist um eine Schwenkachse vertikal schwenkbar, die sich mit der Drehachse der vorderen Rolle 64 deckt, die wiederum in dem Rahmen 12 bzw. dessen Seitenwänden 22 gelagert ist. Das Zugmittel 71 ist über die Rollen 64, 65 gespannt und überbrückt den Abstand zwischen den Rollen 64 und 65, um für eine mehr oder weniger geschlossene Förderfläche zu sorgen. Das Zugmittel 71 kann in der Form mehrerer nebeneinander gelegener Riemen, als Förderband oder Stabkettenförderer ausgebildet sein. Das Zugmittel 71 ist so bemessen, daß sein oberes Trum ausgelenkt werden kann. Je nach dem erforderlichen Maß der Auslenkung kann die rückwärtige Rolle 64 radial beweglich in dem Träger 69 festgelegt sein. Die Ausbildung des Bodenförderers 30 mit einem Zugmittel 71 ist für dieses Ausführungsbeispiel gewählt, aber nicht zwingend. Statt dessen können auch mehrere Rollen 64, 65 nahe beieinander angeordnet werden, die insgesamt im wesentlichen eine Förderoberfläche bilden können, wie sie auch von dem über die Rollen 64, 65 geführten Zugmittel 71 geformt wird. In der in Figur 1 gezeigten Stellung nimmt der Bodenförderer 30, bzw. dessen Träger 69 im wesentlichen eine horizontale Stellung ein.

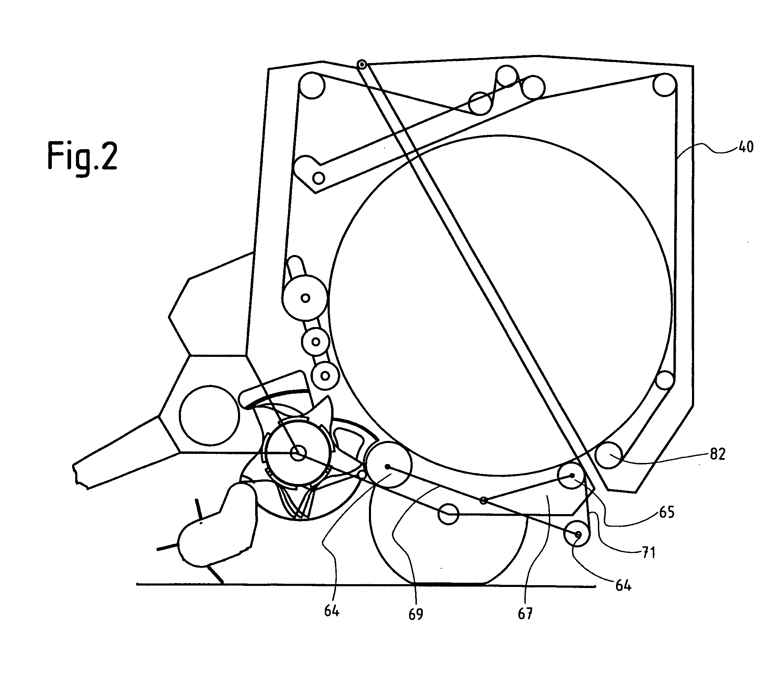

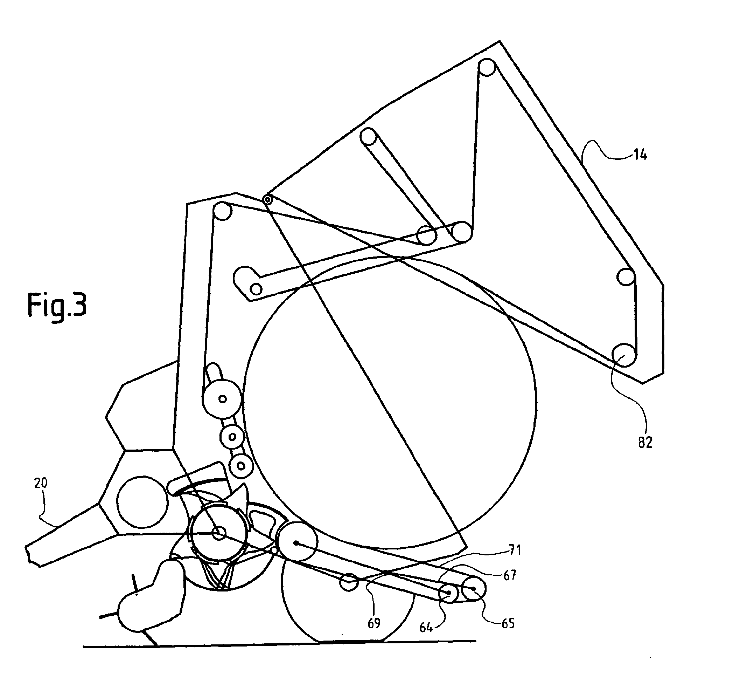

Jeder Arm 67 wird auf nicht gezeigte Weise z. B. mittels einer Welle, eines Kurbelarms und einem Stellmotor in einer sich in der Fahrtrichtung erstreckenden vertikalen Ebene verschwenkt. Die Schwenkbewegung ist so gesteuert, daß die bewegliche Rolle 65 zum Beginn des Preßvorgangs eine Stellung einnimmt, die sich links und unterhalb der in Figur 1 gezeigten befindet, so daß sich ein unteres Trum des Ballenformmittels 40 gerade oder im wesentlichen gerade erstrecken kann. In der in Figur 2 gezeigten Stellung hat der Rundballen 44 seine volle Größe erreicht. In dieser Situation sind die Arme 67 mit der Rolle 65 nach hinten in eine ca. 2-Uhr-Stellung geschwenkt. In dieser Stellung befindet sich die bewegliche Rolle 65 in unmittelbarer Nähe einer weiter unten näher bezeichneten unteren Umlenkrolle 82 der Klappe 14. In diesem Zustand befindet sich die vordere Rolle 64 und die bewegliche Rolle 65 im wesentlichen auf derselben Höhe, so daß das darüberhängende Zugmittel 71 eine Mulde bildet, in der der Rundballen 44 bodenseitig aufgenommen werden kann. Der Träger 69 ist hinten bereits nach unten geklappt, und die rückwärtige Rolle 64 befindet sich nahe des Bodens wesentlich unterhalb der vorderen Rolle 64. In der in Figur 3 gezeigten Stellung wird der Rundballen 44 ausgeworfen, wozu die Arme 67 mit Blick auf die Zeichnung nach hinten im Uhrzeigerdrehsinn geschwenkt werden, bis sich die bewegliche Rolle 65 hinter und dennoch geringfügig oberhalb der rückwärtigen feststehenden Rolle 64 befindet. In dieser Situation ergibt sich eine im wesentlichen gerade und nach hinten abfallende Oberfläche des Bodenförderers 30, auf der der Rundballen 44 bei angehobener Klappe 14 nach hinten herausrollen kann.

Die Bewegung der Arme 67 kann in einer vereinfachten Ausführungsform auch mittels Federn gesteuert werden, die die bewegliche Rolle 65 stets zu dem Einlaß 58 hindrängen und nur aufgrund des Gewichts des Rundballens 44 nach hinten zu der Klappe 14 hin bewegt werden.

Der Bodenförderer 30 begrenzt den Preßraum 42 in seinem unteren Bereich auf einem Teil seines Umfangs. Die Rollen 64 sind vorzugsweise angetrieben.

Der Träger 32 ist in der Art einer biegesteifen Schiene ausgebildet und doppelt vorgesehen, nämlich an, jeder Seitenwand 22, wobei nicht gezeigte aber hinlänglich bekannte Versteifungselemente zwischen beiden vorgesehen sind. Der Träger 32 ist um eine sich quer zu der Fahrtrichtung der Rundballenpresse 10 verlaufende, horizontale Schwenkachse 66 in einer vertikalen Ebene schwenkbar. Die Schwenkachse 66 befindet sich zwischen den Enden des Trägers 32 und in diesem Ausführungsbeispiel ungefähr in seiner Mitte, so daß er sich wie eine Wippe bewegen kann.

Die Walzen 34 lassen sich unterscheiden in eine untere, eine mittlere und eine obere Walze 34, wenn man von drei Walzen 34 ausgeht, was jedoch nicht zwingend ist. Die Walzen 34 sind drehbar zwischen den beiden Trägern 32 aufgenommen und erstrecken sich über die gesamte Breite des Preßraums 42. Die Anordnung ist derart gewählt, daß dann, wenn der Rundballen 44 im wesentlichen seine volle Größe erreicht hat, die dem Rundballen 44 zugelegenen Flächen bzw. Kanten auf einer gekrümmten Fläche liegen, die dem Durchmesser des Rundballens 44 folgt. Die Durchmesser der unteren und der mittleren Walze 34 sind größer als der der oberen Walze 34. Die untere Walze 34 befindet sich stets nahe an der rückwärtigen Kante des Deckels 50. Die Drehachse der mittleren Walze 34 bildet zugleich die Schwenkachse 66, was jedoch nicht zwingend ist und in anderen Ausführungsbeispielen anders gelöst werden kann. Insbesondere kann die Schwenkachse 66 nach unten, oben, vorne oder hinten versetzt sein. Zwischen der mittleren und der oberen Walze 34 besteht ein Spalt, durch den das Ballenformmittel 40 verläuft. Die untere und die mittlere Walze 34 bilden unmittelbar einen Teil der Wandung des Preßraums 42 und werden von dem darin gepreßten Gut direkt beaufschlagt.

Die Verwendung eines Trägers 32 mit darauf gelagerten Rollen 34 ist für die Erfindung nicht erforderlich. Vielmehr reicht eine einzige Rolle oder eine einzige Umlenkrolle aus, über die das Ballenformmittel 40 geführt ist. Im Falle eines Trägers 32 ist es vorteilhaft, wenn dieser schwenkbar ist, aber ebenfalls nicht erforderlich.

Eine Umlenkrolle 36, die vorzugsweise angetrieben wird, erstreckt sich zwischen den Seitenwänden 22 und ist in diesen drehbar und parallel zu den Walzen 34 gelagert.

Die Spannvorrichtung 38 enthält in im wesentlichen bekannter Weise einen Arm 68, ein Lager 70 und einen Kraftspeicher 72.

Der Arm 68 wird von einer massiven Stahlschiene oder -rohr gebildet und ist wie der Träger 32 doppelt ausgeführt, d. h. im Bereich beider Seitenwände 22 vorhanden. Der Arm 68 erstreckt sich ungefähr über die gesamte Länge der Seitenwand 22 und ist an dem dem Lager 70 abgelegenen Endbereich mit zwei Umlenkrollen 36 versehen, die in der radialen Richtung einen Abstand zueinander aufweisen. Der Arm 68 erstreckt sich an dem dem Lager 70 zugelegenen Endbereich über das Lager 70 hinaus und ist leicht abgewinkelt, um einen Hebelarm 74 zu bilden.

Das Lager 70 nimmt den Arm 68 an dem den Umlenkrollen 36 gegenüberliegenden Endbereich vertikal schwenkbar auf. Hierzu können an jeder Seitenwand 22 jeweils ein separates Lager 70 oder ein sich zwischen den Seitenwänden 22 erstreckendes Lager vorgesehen werden.

Der Kraftspeicher 72 ist in diesem Ausführungsbeispiel von einer Schraubenzugfeder gebildet; statt dessen könnte auch ein Hydraulikzylinder mit Gasdruckspeicher oder Drossel, eine andere Federart, eine Kombination daraus oder dergleichen verwendet werden. Der Kraftspeicher 72 ist einenends an den Hebelarm 74 und anderenends an einem Halter 76 befestigt, der ortsfest an dem Rahmen 12 bzw. der Seitenwand 22 angreift. Normalerweise ist der Kraftspeicher 72 wenigstens geringfügig vorgespannt. Es ist aber auch eine Ausführungsform denkbar, bei der der Widerstand durch den Kraftspeicher 72 veränderbar ist, z. B. mittels einer steuerbaren Drossel, um etwa eine unterschiedliche Verdichtung über dem Durchmesser des Rundballens 44 zu erzeugen, so daß ein sog. Weichkern erreicht wird. Die Wirkungsrichtung des Kraftspeichers 72 ist so gewählt, daß der Arm 68 mit seinen Umlenkrollen 36 stets zu dem Einlaß 58 hin gedrängt wird, d. h. im Sinne eines möglichst kleinen Preßraums 42.

Das Ballenformmittel 40 ist in diesem Ausführungsbeispiel aus mehreren parallel zueinander verlaufenden schmalen Riemen gebildet, wie dies an sich bekannt ist. Das sich durch den Rahmen 12 und die Klappe 14 erstreckende Ballenformmittel 40 ist in sich geschlossen. Alternativ könnte auch jeweils ein einziges Ballenformmittel 40 in dem Rahmen 12 und der Klappe 14 verwendet werden. Aufgrund des Schwenkvermögens des Arms 68 und des Trägers 32 kann der sich zwischen dem Spalt und einer unteren rückwärtigen Umlenkrolle 82 in der Klappe 14 erstreckende Bereich des Ballenformmittels 40 ausgelenkt und in der Größe verändert werden. Dieser Bereich stellt einen Teil der Wandung des Preßraums 42 dar und wird direkt von dem Gut in dem Preßraum 42 beaufschlagt.

Der Preßraum 42 ist von variabler Größe und wird umgeben von dem Einlaß 58, den Walzen 34 auf dem Träger 32, dem Teil des Ballenformmittels 40 zwischen dem Spalt, der Umlenkrolle 82 in der Klappe 14 und dem Bodenförderer 30. An den Stirnseiten wird der Preßraum 42 im wesentlichen von den Seitenwänden 22 geschlossen.

Der Rundballen 44 wird aus Erntegut gebildet, das spiralförmig aufgewickelt wird und letztlich eine Größe erreicht, wie sie in Figur 2 gezeigt ist. Zum Entladen des Rundballens 44 aus dem Preßraum 42 wird die Klappe 14 entgegen dem Uhrzeigerdrehsinn geschwenkt, d. h. angehoben, so daß der Rundballen 44 den Bodenförderer 30 hinunter auf den Boden rollen kann. Die Dichte des Rundballens 44 wird durch die Spannung des Ballenformmittels 40 erreicht, die von dem Kraftspeicher 72 aufgebracht wird.

Die Klappe 14 ist in einem Lager 78 vertikal schwenkbar an den Rahmen 12 angeschlossen, wobei die Schwenkbewegung von nicht gezeigten aber hinlänglich bekannten Hydraulikzylindern hervorgerufen wird. Die Klappe 14 enthält zwei Seitenwände 80, mehrere Umlenkrollen 82 und einen Abschnitt des Ballenformmittels 40.

Die Seitenwände 80 verlaufen in derselben Ebene wie die Seitenwände 22 des Rahmens 12 und schließen den Preßraum 42 an seinen noch freien Stirnseiten ab. Zwischen den Seitenwänden 80 erstrecken sich nicht gezeigte aber bekannte Versteifungselemente.

Die Umlenkrollen 82, in diesem Ausführungsbeispiel vier, sind ortsfest aber drehbar in den Seitenwänden 80 aufgenommen und erstrecken sich parallel zu den Umlenkrollen 36 über die gesamte Breite des Preßraums 42. Die Umlenkrollen 82 befinden sich oben vorne, oben hinten, unten hinten und ganz unten vorne. Die untere vordere Umlenkrolle 82 liegt in einer Situation gemäß Figur 1 in unmittelbarer Nachbarschaft zu der rückwärtigen unteren Rolle 64 des Bodenförderers 30. Zwischen der unteren vorderen Umlenkrolle 82 in der Klappe 14 und der einzigen Umlenkrolle 36 in dem Rahmen 12 sind die Umlenkrollen 36 vorgesehen, die von den Armen 68 getragen werden.

Nach alledem ergibt sich folgende Funktion der Rundballenpresse 10 gemäß den Figuren 1 bis 3.

In einer nicht gezeigten Situation, in der sich jeder Arm 68 aufgrund der Wirkung des Kraftspeichers 72 in seiner untersten Stellung befindet, nimmt der Träger 32 ungefähr seine in Figur 1 gezeigte Stellung ein, und die Trume zwischen der oberen Walze 34 auf dem Träger 32, und der vorderen unteren Umlenkrolle 82 in der Klappe 14 erstrecken sich im wesentlichen in einer Ebene von vorne oben nach hinten unten unter einer Neigung von ca. 20 Grad. Die Arme 67 heben die Rolle 65 bis zur Anlage an dem dem Preßraum 42 zugelegenen Trum des Ballenformmittels 40 an und verwandelt den ansonsten langen, dreiecksförmigen Preßraum 42 in einen kleinen fast gleichschenkligen Preßraum 42, der schnell mit Preßgut zu füllen ist.

Der Preßraum 42 nimmt in diesem Fall die Form eines nahezu liegenden Dreiecks ein. In diesem Fall weist der Preßraum 42 das kleinste Volumen auf.

Zum Beginn des Preßvorgangs wird die Rundballenpresse 10 über ein Feld mit z. B. in Schwaden abgelegtem Erntegut bewegt und das Erntegut mittels des. Aufnehmers 24 vom Boden aufgesammelt und dem Schneidwerk 28 zugeführt. Der Rotor 52 fördert das Gut oberschlächtig und gegebenenfalls an den Messern 54 vorbei in den Preßraum 42, wo es in Berührung mit den Trumen des Ballenformmittels 40 und des Zugmittels 71 gelangt. Aufgrund der drehbaren Lagerung und gegebenenfalls des Antriebs der Rollen 64 und Walzen 34 zusammen mit der packenden Oberfläche des Ballenformmittels 40 und des Zugmittels 40, 71 wird das Erntegut bei ausreichender Menge in Drehung versetzt, und zwar entgegen dem Uhrzeigerdrehsinn mit Blick auf die Figuren 1 bis 3 der Zeichnung. In einer anderen Ausführungsform kann der Rundballen 44 auch entgegen im Uhrzeigerdrehsinn aufgewickelt werden.

Mit zunehmender Erntegutmenge erreicht die Rundballenpresse 10 den in Figur 1 dargestellten Betriebszustand, in dem der Arm 68 in geringem Maß gegen die Wirkung des Kraftspeichers 72 nach oben bewegt ist und somit das untere Trum des Ballenformmittels 40 nach oben auslenkt, so daß es aus der gemeinsamen Ebene ausscheren und eine stumpfe Dachform einnehmen kann. Der Träger 32 wird um die Schwenkachse 66 geringfügig entgegen dem Uhrzeigerdrehsinn geschwenkt, so daß sich seine untere Walze 34 in den Preßraum 42 hinein bewegt. Der Rundballen 44 stützt sich in dieser Situation auf der vorderen Rolle 64 des Bodenförderers 30, auf den Abstreifern 56 und dem vorderen oberen Bereich des Zugmittels 71 ab.

Mit weiter zugeführtem Erntegut erreicht der Rundballen 44 die in Figur 2 gezeigte Größe. In diesem Betriebszustand ist der Arm 68 vollkommen nach oben geschwenkt und der Kraftspeicher 72 vollkommen gespannt, so daß die größtmögliche Dichte auf der Umfangsfläche des Rundballens 44 erreicht wird. Da der Bodenförderer 30 nicht willkürlich ausweichen kann, baut sich der Rundballen 44 nach oben auf, so daß seine Umfangsfläche auf die obere Walze 34 drückt und den Träger 32 entgegen dem Uhrzeigerdrehsinn um die Schwenkachse 66 schwenkt. Da sich die Schwenkachse 66 zwischen den Enden des Trägers 32 befindet, bewirkt diese Schwenkbewegung, daß sich der untere Endbereich des Trägers 32 mit der unteren Walze 34 in den Preßraum 42 hinein bewegt und dabei den Rundballen 44 nach hinten verlagert, so daß er sich nur noch auf dem Bodenförderer 30 mit dessen beweglicher Rolle 65 und der vorderen unteren Umlenkrolle 82 in der Klappe 14 abstützt. Da der Rundballen 44 nicht mehr direkt an dem Einlaß 58 vorbeigleitet, kann neues Erntegut leichter in den Preßraum 42 eingespeist werden, und da im Bereich des Trägers 32 drei Walzen 34 auf die Umfangsfläche des Rundballens 44 drücken, wird sowohl eine gute Führung des Rundballens 44 als auch eine hohe Verdichtung erreicht.

Zum Auswerfen des Rundballens 14 wird die Klappe 14 entgegen dem Uhrzeigerdrehsinn angehoben, der Träger 69 im Uhrzeigerdrehsinn mit Blick auf die Zeichnung geschwenkt und die Arme 67 soweit nach hinten geschwenkt, daß sich eine im wesentlichen ebene obere Fläche des Zugmittels 71 ergibt, auf der der Rundballen 44 reibungsarm abrollen kann.

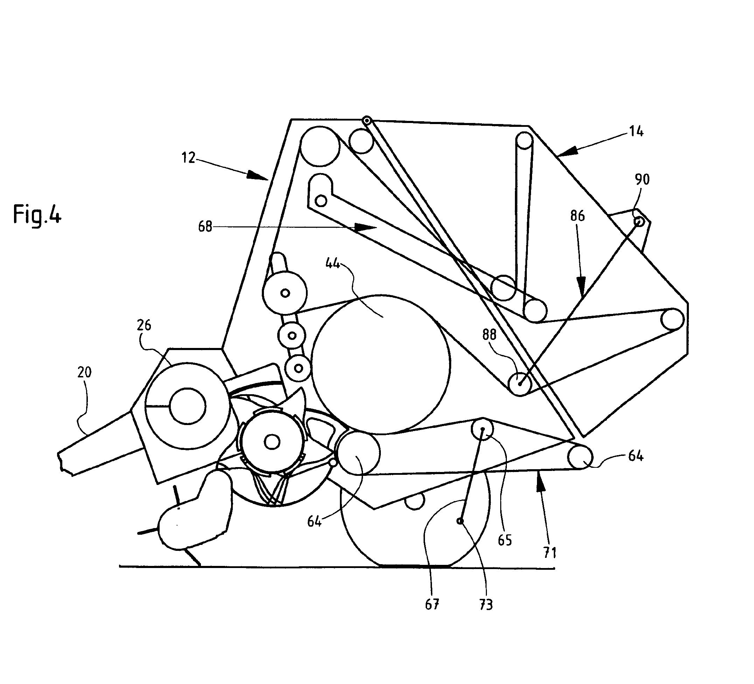

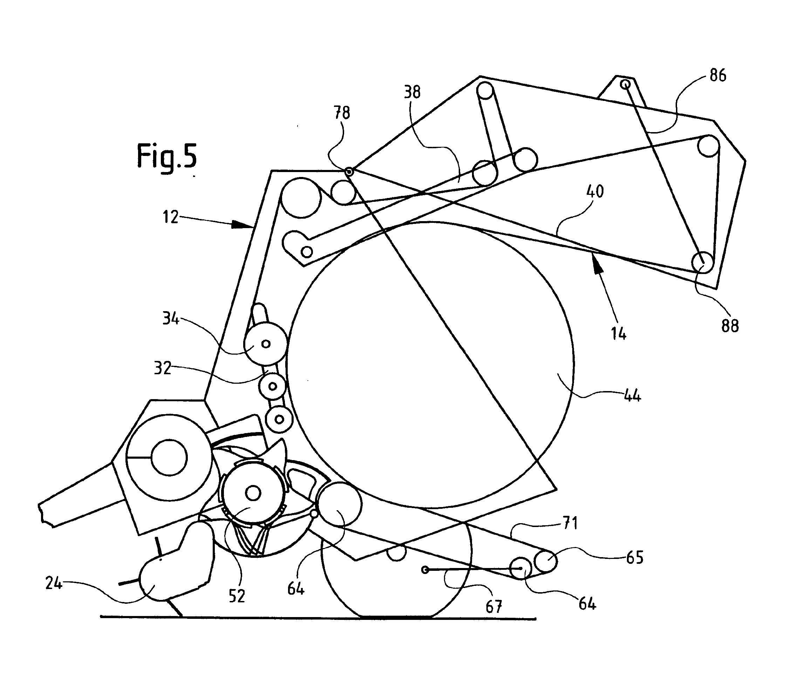

Die Figuren 4 und 5 zeigen ein Ausführungsbeispiel der Erfindung, das dem Ausführungsbeispiel nach den Figuren 1 bis 3 weitestgehend entspricht und auch die gleiche Funktion aufweist. Allerdings weist die Klappe 14 nach dem Ausführungsbeispiel in den Figuren 4 und 5 zwei vertikal schwenkbare Arme 86 mit einer darauf drehbar gelagerten Umlenkrolle 88 auf, und die Arme 67 sind an einer Stelle an dem Träger 69 gelagert, die sich spürbar unterhalb des unteren Trums des Zugmittels 71 befindet.

Die bewegliche Umlenkrolle 88 tritt an die Stelle der unteren vorderen Umlenkrolle 82 in der Klappe 14 und kann mit dem darüber verlaufenden Ballenformmittel 40 nach vorne aus der Klappe 14 herausgeschwenkt werden, wie dies aus Figur 4 ersichtlich wird. Der Arm 86 bzw. die beiden Arme 86 werden mittels nicht gezeigter Hydraulikmotoren oder Federn derart gesteuert, daß die bewegliche Umlenkrolle 88 den Preßraum 42 stets so klein wie möglich hält und dadurch die Dichte des Rundballens 44 erhöht. Die Steuerung kann dabei so erfolgen, daß die beweglichen Rollen 88 und 65 wie aus Figur 4 ersichtlich während des Preßvorgangs nahe beieinander angeordnet und geführt werden. Die Arme 86 sind in einem Lager 90 an der Rückseite der Klappe 14 aufgehängt.

Die Arme 67 des Bodenförderers 30 tragen an ihrem in Figur 4 oben gelegenen Ende die bewegliche Rolle 65 und sind mit ihrem unteren Endbereich in einem Lager 73 gehalten, das sich ungefähr in der Höhe der Achse 16 befindet. Die Länge der Arme 67 und die Lage des Lagers 73 sind so bemessen, daß die bewegliche Rolle 65 in einer Lage gemäß Figur 5 vor der festen Rolle 64 zu liegen kommt anstatt dahinter, wie in dem Ausführungsbeispiel nach den Figuren 1 bis 3, d. h. die bewegliche Rolle 65 ist nur zwischen den beiden festen Rollen 64 beweglich.

Anstatt der Anbringung der beweglichen Rolle 65 auf schwenkbaren Armen 67 wäre es auch möglich, sie in Gleit- oder Rollführungen, in Kurvenbahnen oder auf mehrteiligen Lenkern zu befestigen.

## Patentansprüche

1. Rundballenpresse (10) mit einem oberen Ballenformmittel (40) und einem Bodenförderer (30), zwischen denen ein Preßraum (42) gebildet wird und von denen der Bodenförderer (30) mehrere Rollen (64), (65) aufweist, **dadurch gekennzeichnet, daß** wenigstens eine der Rollen (65) des Bodenförderers (30) während des Preßvorgangs radial und mit Bezug auf den Preßraum (42) beweglich ist.

2. Rundballenpresse nach Anspruch 1, **dadurch gekennzeichnet, daß** der Bodenförderer (30) nur aus ortsfesten und beweglichen Rollen (64), (65) besteht.

3. Rundballenpresse nach Anspruch 1, **dadurch gekennzeichnet, daß** der Bodenförderer wenigstens eine ortsfeste Rolle (64), wenigstens eine bewegliche Rolle (65) und wenigstens ein über die Rollen (64), (65) verlaufendes Zugmittel (71) enthält.

4. Rundballenpresse nach einem oder mehreren der vorherigen Ansprüche, **dadurch gekennzeichnet, daß** der Bodenförderer (30) als Gesamtheit um eine horizontale Achse schwenkbar ist.

5. Rundballenpresse nach einem oder mehreren der vorherigen Ansprüche, **dadurch gekennzeichnet, daß** die bewegliche Rolle (65) an Armen (67) um eine Schwenkachse oder in einer Bahn beweglich geführt und von Fremdkraft beaufschlagt ist.

6. Rundballenpresse nach Anspruch 5, **dadurch gekennzeichnet, daß** die Schwenkachse zwischen zwei Trumen des Zugmittels (71) gelegen ist.

7. Rundballenpresse nach einem oder mehreren der vorherigen Ansprüche, **dadurch gekennzeichnet, daß** das obere Ballenformmittel (40) über eine in einer schwenkbaren Klappe (14) der Rundballenpresse (10) befindliche bewegliche Umlenkrolle (88) verläuft.

8. Rundballenpresse nach Anspruch 7, **dadurch gekennzeichnet, daß** die bewegliche Rolle (65) und die bewegliche Umlenkrolle (88) während des Preßvorgangs einander benachbart bleiben.

9. Rundballenpresse nach einem oder mehreren der vorherigen Ansprüche, **dadurch gekennzeichnet, daß** die bewegliche Rolle (65) des Bodenförderers (30) stets zwischen zwei insbesondere ortsfesten Rollen (64) des Bodenförderers (30) beweglich ist.

10. Rundballenpresse nach einem oder mehreren der vorherigen Ansprüche 1 bis 8, **dadurch gekennzeichnet, daß** die bewegliche Rolle (65) des Bodenförderers (30) in eine Stellung außerhalb eines Raums zwischen zwei insbesondere ortsfesten Rollen (64) beweglich ist.
